# EUROPÄISCHE PATENTSCHRIFT

(11) **EP 1 311 628 B1**
(45) Veröffentlichungstag und Bekanntmachung des Hinweises auf die Patenterteilung: **25.10.2006**
(21) Anmeldenummer: 01967281.5
(22) Anmeldetag: 17.08.2001
(51) Int. Cl.: C09D 5/02, C09D 133/06, C09D 201/06, C09D 175/04, C08G 18/79, C08G 18/72, C08G 18/62

(54) **STRUKTURVISKOSE, VON ORGANISCHEN LÖSEMITTELN UND EXTERNEN EMULGATOREN FREIE PULVERKLARLACK-SLURRY, VERFAHREN ZU IHRER HERSTELLUNG UND IHRE VERWENDUNG**
PSEUDOPLASTIC POWDERED LACQUER SLURRY FREE OF ORGANIC SOLVENTS AND EXTERNAL EMULSIFIERS, METHOD FOR PRODUCTION AND USE THEREOF
VERNIS CLAIRS PULVERULENTS EN SUSPENSION A VISCOSITE INTRINSEQUE SANS SOLVANTS ORGANIQUES NI EMULSIFIANTS EXTERNES, PROCEDE DE PRODUCTION ET UTILISATION DESDITS VERNIS CLAIRS

(30) Priorität: 17.08.2000 DE 10040223
(43) Veröffentlichungstag der Anmeldung: 21.05.2003
(73) Patentinhaber: BASF Coatings AG, 48165 Münster (DE)
(72) Erfinder: OTT, Günther, 48167 Münster (DE); WOLTERING, Joachim, 48159 Münster (DE); RÖCKRATH, Ulrike, 48308 Senden (DE)
(86) Internationale Anmeldenummer: PCT/EP2001/009487
(87) Internationale Veröffentlichungsnummer: WO 2002/014440

(56) Entgegenhaltungen:
- EP-A- 0 548 690
- DE-A- 19 841 842
- DE-A- 19 855 167
- DE-C- 4 223 182
- US-A- 4 578 426

## Beschreibung

Die vorliegende Erfindung betrifft eine neue, von organischen Lösemitteln und externen Emulgatoren freie Pulverklarlack-Slurry, welche eine Strukturviskosität aufweist. Außerdem betrifft die vorliegende Erfindung ein neues Verfahren zur Herstellung dieser Pulverklarlack-Slurry. Nicht zuletzt betrifft die Erfindung die Verwendung der neuen Pulverklarlack-Slurry für die Herstellung von Klarlackierungen für die Automobilerst- und die Automobilreparaturlac??kierung, die industrielle Lackierung, inklusive Coil Coating, Container Coating und Beschichtung oder Imprägnierung von elektrotechnischen Bauteilen, die Lackierung von Möbeln, Fenster, Türen und Bauwerken im Innen- und Außenbereich.

Aus der internationalen Patentanmeldung WO 00/15721 ist eine von organischen Lösemittel und externen Emulgatoren freie Pulverklarlack-Slurry bekannt, die feste sphärische Partikel einer mittleren Teilchengröße von 0,8 bis 20 µm und einer maximalen Teilchengröße von 30 µm enthält, wobei die Pulverklarlack Slurry einen Gehalt an Ionen bildenden Gruppen von 0,05 bis 1 meq/g, einen Gehalt an Neutralisationsmitteln von 0,05 bis 1 meq/g und eine Viskosität von (i) 50 bis 1000 mPas bei einer Scherrate von 1000 s⁻¹, (ii) 150 bis 8000 mPas bei einer Scherrate von 10 s⁻¹ und (iii) 180 bis 12000 mPas bei einer Scherrate von 1 s⁻¹ aufweist. Diese bekannten Pulverklarlack-Slurry enthält als Vernetzungsmittel ein blockiertes Polyisocyanat auf der Basis von Isophorondiisocyanat, das mit Trimethylolpropan im Molverhältnis von 3 : 1 zu einem Urethangruppen enthaltenden Trimeren umgesetzt wurde, wonach die verbleibenden freie Isocyanatgruppen mit 3,5-Dimethylpyrazol blockiert wurden.

Auf Seite 11, Zeilen 23 bis 25, der internationalen Patentanmeldung WO 00/15721 wird darauf verwiesen, daß auch die in den Patentanmeldungen DE 196 17 086 A 1, DE 196 31 269 A 1 oder EP 0 004 571 A 1 beschriebenen blockierten Polyisocyanate eingesetzt werden können. Insbesondere werden darin blockierte Polyisocyanate auf der Basis von Hexamethylendiisocyanat, Butandiisocyanat, Isophorondüsocyanat, hydriertem und nicht hydriertem Toluylidendiisocyanat, Xylylidendüsocyanat, 4,4'-Diisocyanatodicyclohexylmethan, 4,4'-Diphenylmethandiisocyanat, 3(4)-Isocyanatomethyl-1-methylcyclohexylisocyanat vorgeschlagen. Es läßt sich jedoch kein Bezug zwischen der Struktur der Polyisocyanate und der Neigung zum Weißanlaufen von Klarlackierungen auf der Basis der bekannten Pulverklarlack-Slurry herstellen.

Die bekannte Pulverklarlack-Slurry ist mit einer vergleichsweise geringen Anzahl an Verärbeitungsschritten herstellbar. Dabei weist sie aufgrund ihrer typischen Pulverslurryeigenschaften mit Restlösemittelgehalten von < 1% und ihren geringen Partikelgrößen ein vorteilhaftes Applikationsverhalten auf. Sie trocknet nach der Applikation während der Abdunstphase bei Raumtemperatur oder leicht erhöhter Temperatur pulverförmig auf. Nach dem Einbrennen resultieren kocherfreie Klarlackierungen von hohem Glanz mit Trockenschichtdicken von ca. 40 - 60 µm.

Bei Feuchtebelastung, beispielsweise in Schwitzwasserkonstantklima oder im Heißwassertest, neigen die Klarlackierungen jedoch zu einer Weißverfärbung (Weißanlaufen), die ihre breite Anwendung insbesondere im Automobilsektor beeinträchtigt.

Eine vergleichbare Pulverklarlack-Slurry wird in der nicht vorveröffentlichten deutschen Patentanmeldung DE 100 01 442.9 beschrieben.

Aufgabe der vorliegenden Erfindung ist es, eine neue Pulverklarlack-Slurry zur Verfügung zu stellen, welche nach wie vor alle Vorteile der Pulverklarlack-Slurry des Standes der Technik aufweist, die aber nach Feuchtebelastung nicht mehr weiß anläuft.

Demgemäß wurde die neue, strukturviskose, von organischen Lösemitteln und externen Emulgatoren freie Pulverklarlack-Slurry gefunden, enthaltend feste und/oder hochviskose, unter Lagerungs- und Anwendungsbedingungen dimensionsstabile Partikel einer mittleren Teilchengröße von 0,8 bis 20 µm und einer maximalen Teilchengröße von 30 µm, wobei die Partikel mindestens ein Bindemittel und mindestens ein Vernetzungsmittel enthalten, wobei als Vernetzungsmittel
(A) mindestens ein Vernetzungsmittel, durch das weiche Segmente in das dreidimensionale Netzwerk der Klarlackierung eingeführt werden, und
(B) mindestens ein Vernetzungsmittel, durch das harte Segmente in das dreidimensionale Netzwerk der Klarlackierung eingeführt werden,
oder alternativ
(A/B) mindestens ein Vernetzungsmittel, durch, das sowohl weiche als auch harte Segmente in das dreidimensionale Netzwerk der Klarlackierung eingeführt werden.
verwendet wird oder werden.

Im folgenden wird die neue, strukturviskose, von organischen Lösemitteln und externen Emulgatoren freie Pulverklarlack-Slurry der Kürze halber als "erfindungsgemäße Slurry" bezeichnet.

Im Hinblick auf den Stand der Technik war es überraschend und für den Fachmann nicht vorhersehbar, daß die der vorliegenden Erfindung zugrundeliegende Aufgabe mit Hilfe von Vernetzungsmitteln gelöst werden konnte, durch die harte und weiche Segmente in die dreidimensionalen Netzwerke der aus der erfindungsgemäßen Slurry hergestellten Klarlackierungen eingeführt werden. Ganz im Gegenteil, stand im Hinblick auf den Stand der Technik zu erwarten, daß die Verwendung solcher Vernetzungsmittel ohne Auswirkung auf die Neigung zum Weißanlaufen sein sollte, da aus dem Stand der Technik kein entsprechender Zusamenhang herleitbar war.

Die erfindungswesentlichen Bestandteile der erfindungsgemäßen Slurry sind die Vernetzungsmittel (A), durch die weiche Segmente in das dreidimensionale Netzwerk der Klarlackierung eingeführt werden, und die Vernetzungsmittel (B), durch die harte Segmente in das dreidimensionale Netzwerk der Klarlackierung eingeführt werden. Anstelle oder zusätzlich zu diesen Vernetzungsmitteln (A) und (B) können auch Vernetzungsmittel (A/B) verwendet werden, durch die sowohl weiche als auch harte Segmente in das dreidimensionale Netzwerk der Klarlackierung eingeführt werden.

Da die Vernetzungsmittel (A) und (B) einfacher herstellbar sind als die Vernetzungsmittel (A/B) und sowohl über die Struktur als auch über die Mengenverhältnisse den Erfordernissen des Einzelfalls leichter angepaßt werden können, wird ihnen den Vorzug gegeben.

Im Rahmen der vorliegenden Erfindung werden unter weichen Segmenten, Molekülbausteine verstanden, die als Bestandteil dreidimensionaler Netzwerke deren Glasübergangstemperatur Tg erniedrigen. Unter harten Segmenten werden dagegen Molekülbausteine verstanden, die als Bestandteil dreidimensionaler Netzwerke deren Glasübergangstemperatur Tg erhöhen.

Beispiele geeigneter harter und weicher Segmente sind zweibindige organische Reste.

Beispiele geeigneter weicher zweibindiger organischer Reste sind substituierte oder unsubstituierte, bevorzugt unsubstituierte, lineare oder verzweigte, vorzugsweise lineare, Alkandiyl-Reste mit 4 bis 20, bevorzugt 5 bis 10 und insbesondere 6 Kohlenstoffatomen.

Beispiele gut geeigneter linearer Alkandiyl-Reste sind sind Tetramethylen, Pentamethylen, Hexamethylen, Heptamethylen, Octamethylen, Nonan-1,9-diyl, Decan-1,10-diyl, Undecan-1,11-diyl Dodecan-1,12-diyl, Tridecan-1,13-diyl, Tetradecan-1,14-diyl, Pentadecan-1,15-diyl, Hexadecan-1,16-diyl, Heptadecan-1,17-diyl, Octadecan-1,18-diyl, Nonadecan-1,19-diyl oder Eicosan-1,20-diyl, bevorzugt Tetramethylen, Pentamethylen, Hexamethylen, Heptamethylen, Octamethylen, Nonan-1,9-diyl, Decan-1,10-diyl, insbesondere Hexamethylen.

Als Substitutienten kommen alle organischen funktionellen Gruppen in Betracht, welche im wesentlichen inert sind, d. h., daß sie keine Reaktionen mit den Vernetzungsmitteln (A), (B) und (A/B) oder anderen Bestandteilen der erfindungsgemäßen Slurry eingehen.

Beispiele geeigneter inerter organischer Reste sind Halogenatome, Nitrogruppen, Nitrilgruppen oder Alkoxygruppen.

Die harten zweibindigen organischen Reste sind aromatische oder cycloaliphatische Reste. Im Hinblick auf die Witterungsstabilität der erfindungsgemäße Klarlackierung werden vorzugsweise cycloaliphatische Reste verwendet. Von diesen sind wiederum substituierte oder unsubstituierte, vorzugsweise unsubstituierte, Cycloalkandiyl-Reste mit 4 bis 20 Kohlenstoffatomen vorteilhaft und werden deshalb erfindungsgemäß bevorzugt verwendet.

Beispiele gut geeigneter Cycloalkandiyl-Reste mit 4 bis 20 Kohlenstoffatomen sind Cyclobutan-1,3-diyl, Cyclopentan-1,3-diyl, Cyclohexan-1,3- oder -1,4-diyl, Cycloheptan-1,4-diyl, Norbornan-1,4-diyl, Adamantan-1,5-diyl, Decalin-diyl, 3,3,5-Trimethyl-cyclohexan-1,5-diyl, 1-Methyleyclohexan-2,6-diyl, Dicyclohexylmethan-4,4'-diyl, 1,1'-Dicyclohexan-4,4'-diyl oder 1,4-Dicyclohexylhexan-4,4"-diyl, insbesondere 3,3,5-Trimethyl-cyclohexan-1,5-diyl oder Dicyclohexylmethan-4,4'-diyl.

Beispiele geeigneter Substituenten sind die vorstehend beschriebenen.

Erfindungsgemäß kommen alle Vernetzungsmittel (A) in Betracht, durch die mindestens eines, vorzugsweise mindestens zwei und insbesondere mindestens drei der vorstehend beschriebenen weichen Segmente in die Klarlackierungen eingeführt werden.

Erfindungsgemäß kommen alle Vernetzungsmittel (B) in Betracht, durch die mindestens eines, vorzugsweise mindestens zwei und insbesondere mindestens drei der vorstehend beschriebenen harten Segmente die Klarlackierungen eingeführt werden.

Des weiteren kommen alle Vernetzungsmittel (A/B) in Betracht, durch die mindestens eines, vorzugsweise mindestens zwei, der vorstehend beschriebenen weichen Segmente und mindestens eines, vorzugsweise eines, der vorstehend beschriebenen harten Segmente oder mindestens eines, vorzugsweise eines, der vorstehend beschriebenen weichen Segmente und mindestens eines, vorzugsweise mindestens zwei, der vorstehend beschriebenen harten Segmente eingeführt werden.

Aufgrund ihrer strukturellen Vielfalt und ihrer leichten Erhältlichkeit bieten blockierte Polyisocyanate, die die vorstehend beschriebenen Segmente enthalten besondere Vorteile und werden deshalb erfindungsgemäß ganz besonders bevorzugt als Vernetzungsmittel (A) und (B) und/oder (A/B) verwendet.

Geeignete blockierte Polyisocyanate (A) und (B) oder (A/B) weisen hinsichtlich der blockierten Isocyanatgruppen eine Funktionalität von > 2, vorzugsweise 2,1 bis 10, bevorzugt 2,5 bis 8, besonders bevorzugt 2,8 bis 6, ganz besonders bevorzugt 3 bis 5 und insbesondere 3 bis 4 auf.

Vorzugsweise werden die blockierte Polyisocyanate (A) und (B) oder (A/B) aus Diisocyanaten, die die entsprechenden Segmente enthalten hergestellt.

Beispiele geeigneter Polyisocyanate, die der Herstellung der blockierte Polyisocyanate (A) oder (A/B) dienen, sind Tetramethylendiisocyanat, Pentamethylendüsocyanat oder Hexamethylendiisocyanat, insbesondere Hexamethylendiisocyanat.

Beispiele geeigneter Polyisocyanate, die der Herstellung der blockierte Polyisocyanate (B) oder (A/B) dienen, sind Isophorondiisocyanat oder 4,4'-Diisocyanatodicyclohexylmethan, insbesondere Isophorondiisocyanat.

Die Diisocyanate werden mit Hilfe üblicher und bekannter Reaktionen in Polyisocyanate umgewandelt. Die resultierenden Polyisocyanate sind Oligomere, die Isocyanurat-, Biuret-, Allophanat-, Iminooxadiazindion-, Urethan-, Carbodiimid-, Harnstoff- und/oder Uretdiongruppen enthalten. Beispiele geeigneter Herstellungsverfahren sind beispielsweise aus den Patentschriften und Patentanmeldungen CA 2,163,591 A 1, US 4,419,513 A, US 4,454,317 A, EP 0 646 608 A 1, US 4,801,675 A 1, EP 0 183 976 A 1, DE 40 15 155 A 1, EP 0 303 150 A 1, EP 0 496 208 A 1, EP 0 524 500 A 1, EP 0 566 037 A 1, US 5,258,482 A, US 5,290,902 A, EP 0 649 806 A 1, DE 42 29 183 A 1 oder EP 0 531 820 A 1 bekannt.

Ganz besonders bevorzugt werden die Oligomeren von Hexamethylendiisocyanat und von Isophorondiisocyanat verwendet.

Die Polyisocyanate werden desweiteren mit geeigneten Blockierungsmitteln blockiert. Beispiele geeigneter Blockierungsmittel sind
i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonopropylether, Diethylenglykolmonomethylether, Diethylenglykolmonoethylether, Propylenglykolmonomethylether, Methoxymethanol, Trimethylolpropan, Glycerin, Glykolsäure, Glykolsäureester, Milchsäure, Milchsäureester, Methylolhamstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Fonnaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylinethacrylohydroxamat (BMH) oder Allylmethacrylohydroxamat; oder
xvi) substituierte Pyrazole oder Triazole; sowie
xvii) Gemische dieser Blockierungsmittel.

Besonders bevorzugt werden substituierte Pyrazole (xvi) wie 3,4-Dimethyl- und/oder 3,5-Dimethylpyrazol oder Gemische (xvii) aus 3,4-Dimethyl- und/oder 3,5-Dimethylpyrazol und Trimethylolpropan verwendet.

Ein Beispiel für ein ganz besonders gut geeignetes blockiertes Polyisocyanat (A) ist das Trimere oder Cyanurat von Hexamethylendiisocyanat, das mit 3,5-Dimethylpyrazol blockiert ist.

Ein Beispiel für ein ganz besonders gut geeignetes blockiertes Polyisocyanate (B) ist das Umsetzungsprodukt von Isophorondiisocyanat und Trimethylolpropan im Molverhältnis 3 : 1, dessen freie Isocyanatgruppen mit 3,5 Dimethylpyrazol blockiert sind.

Der Gehalt der Partikel der erfindungsgemäßen Slurry an den vorstehend beschriebenen Vernetzungsmitteln kann sehr breit variieren und richtet sich in erster Linie nach der Anzahl der komplementären reaktiven funktionellen Gruppen in den Bindemitteln und der Funktionalität der Vernetzungsmittel. Vorzugsweise enthält die erfindungsgemäße Slurry, bezogen auf ihren Festkörper, 5 bis 60, bevorzugt 15 bis 55, besonders bevorzugt 20 bis 50, ganz besonders bevorzugt 25 bis 50 und insbesondere 30 bis 45 Gew.-% der Vernetzungsmittel.

Dabei kann das Mischungsverhältnis von Vernetzungsmitteln (A) zu Vernetzungsmittleln (B) ebenfalls breit variieren. Vorzugsweise liegt das Äquivalentverhältnis bei (A) : (B) bei 10 : 1 bis 1 : 10, bevorzugt 9 : 1 bis 1 : 5, besonders bevorzugt 8 : 1 bis 1 : 4, ganz besonders bevorzugt 6 : 1 bis 1 : 2 und insbesondere 4 : 1 bis 1 : 1.

Außer den vorstehend beschriebenen erfindungsgemäß zu verwendenden Vernetzungsmitteln (A) und (B) und/oder (A/B) kann die erfindungsgemäße Slurry noch mindestens ein weiteres übliches und bekanntes Vernetzungsmittel in untergeordneten Mengen enthalten, d. h., daß das Vernetzungsverhalten der erfindungsgemäßen Slurry in der Hauptsache von den vorstehend beschriebenen erfindungsgemäß zu verwendenden Vernetzungsmitteln bestimmt wird. Vorzugsweise beträgt die Menge an zusätzlichen Vernetzungsmittel bis zu 10 Gew.-%, bezogen auf die Gesamtmenge der Vernetzungsmitteln. Beispiele geeigneter zusätzlicher Vernetzungsmittel sind Tris(alkoxycarbonylamino)triazine, wie sie in den Patentschriften US 4,939,213 A, US 5,084,541 A oder US 5,288,865 A oder in der europäischen Patentanmeldung EP 0 604 922 A 1 beschrieben werden.

Für die erfindungsgemäße Slurry ist es des weiteren wesentlich, daß die mittlere Teilchengröße der festen Partikel bei 0,8 bis 20 µm, und besonders bevorzugt bei 3 bis 15 µm liegt. Unter mittlerer Teilchengröße wird der nach der Laserbeugungsmethode ermittelte 50%-Medianwert verstanden, d.h., 50% der Partikel haben einen Teilchendurchmesser ≤ dem Medianwert und 50% der Partikel einen Teilchendurchmesser ≥ dem Medianwert.

Slurries mit derartigen mittleren Teilchengrößen und einem Lösemittelgehalt von < 1% weisen ein besseres Applikationsverhalten auf und zeigen bei den applizierten Filmstärken von > 30 µm, wie sie derzeitig in der Automobilindustrie bei der Endlackierung von Automobilen praktiziert werden, eine - wenn überhaupt - nur geringe Neigung zu Kochern und zum "mudcracking.

Die Teilchengröße findet ihre obere Begrenzung dann, wenn die Partikel aufgrund ihrer Größe beim Einbrennen nicht mehr vollständig verlaufen können, und damit der Filmverlauf negativ beeinflußt wird. In Fällen geringerer Ansprüche an das Aussehen kann sie jedoch auch höher liegen. Als Obergrenze werden 30 µm für sinnvoll erachtet, da ab dieser Teilchengröße mit einer Verstopfung der Sprühdüsen und Förderaggregate der hochempfindlichen Applikationsapparaturen zu rechnen ist.

Die in der erfindungsgemäßen Slurry enthaltenen Partikel sind fest und/oder hochviskos. Im Rahmen der vorliegenden Erfindung bedeutet "hochviskos", daß sich die Partikel unter den üblichen und bekannten Bedingungen der Lagerung und der Anwendung von Pulverklarlack-Slurries im wesentlichen wie feste Partikel verhalten.

Die in erfindungsgemäßen Slurry enthaltenen Partikel sind außerdem dimensionsstabil. Im Rahmen der vorliegenden Erfindung bedeutet "dimensionsstabil", daß die Partikel unter den üblichen und bekannten Bedingungen der Lagerung und der Anwendung von Pulverklarlack-Slurries weder agglomerieren noch in kleinere Partikel zerfallen, sondern auch unter dem Einfluß von Scherkräften im wesentlichen ihre ursprünglichen Form bewahren.

Die erfindungsgemäße Slurry ist frei von organischen Lösemitteln. Im Rahmen der vorliegenden Erfindung bedeutet dies, daß sie einen Restgehalt an flüchtigen Lösemitteln von < 1 Gew.-%, bevorzugt < 0,5 Gew.-% und besonders bevorzugt < 0,2 Gew.-% hat. Erfindungsgemäß ist es von ganz besonderem Vorteil, wenn der Restgehalt unterhalb der gaschromatographischen Nachweisgrenze liegt.

In gleicher Weise ist im Rahmen der vorliegenden Erfindung die Angabe "frei von externen Emulgatoren" zu verstehen.

Die vorstehend beschriebenen erfindungsgemäß zu verwendenden Teilchengrößen werden auch ohne Zuhilfenahme von zusätzlichen externen Emulgatoren erhalten, wenn das Bindemittel einen Gehalt an Ionen bildenden Gruppen, entsprechend einer mittleren Säurezahl oder Amin-Zahl von 3 bis 56 g KOH/g Festkörper (MEQ-Säure oder -Amin von 0,05 bis 1,0 meq/g Festkörper), vorzugsweise bis 28 (MEQ-Säure oder Amin: 0,5) und insbesondere bis 17 (MEQ-Säure oder-Amin: 0,3), enthält.

Es wird vorzugsweise ein niedriger Gehalt solcher Gruppen angestrebt, da bei Verwendung der gebräuchlichen Vernetzungsmittel, wie zum Beispiel blockierten Polyisocyanaten, freie Gruppen dieser Art im Film zurückbleiben und diese die Festigkeit gegenüber Umweltstoffen und Chemikalien vermindern können. Andererseits muß der Säuregruppengehalt noch genügend hoch sein, um die gewünschte Stabilisierung zu gewährleisten.

Die Ionen bildenden Gruppen werden mit Hilfe von Neutralisationsmitteln zu 100% oder auch nur zu < 100% teilneutralisiert. Die Menge des Neutralisationsmittels wird in der Weise gewählt, daß der MEQ -Wert der erfindungsgemäßen Slurry unterhalb 1, vorzugsweise unterhalb 0,5 und insbesondere unterhalb 0, 3 meq/g Festkörper liegt. Erfindungsgemäß ist es von Vorteil, wenn die Menge des Neutralisationsmittels mindestens einem MEQ-Wert von 0,05 meq/g Festkörper entspricht.

Die chemische Natur des Bindemittels ist daher in der Regel nicht beschränkend, solange hierin Ionen bildende Gruppen enthalten sind, die über eine Neutralisation in Salzgruppen überführbar sind und dadurch eine ionische Stabilisierung der Partikel in Wasser übernehmen können.

Als Anionen bildende Gruppen kommen Säuregruppen wie Carbonsäure-, Sulfonsäure- oder Phosphonsäuregruppen in Betracht. Demgemäß werden als Neutralisationsmittel Basen, wie Alkalimetallhydroxide, Ammoniak oder Amine verwendet. Alkalimetallhydroxide sind nur in beschränktem Maße einsetzbar, da die Alkalimetallionen beim Einbrennen nicht flüchtig sind und durch ihre Unverträglichkeit mit organischen Stoffen den Film trüben und zu Glanzverlusten führen können. Daher sind Ammoniak oder Amine bevorzugt. Im Falle von Aminen werden wasserlösliche tertiäre Amine bevorzugt. Beispielhaft seien N,N-Dimethylethanolamin oder Aminomethylpropanolamin (AMP) genannt.

Als Kationen bildende Gruppen kommen primäre, sekundäre oder tertiäre Amine in Betracht. Demgemäß werden als Neutralisationsmittel insbesondere niedermolekulaie organische Säuren wie Ameisensäure, Essigsäure oder Milchsäure verwendet.

Bindemittel, welche Kationen bildende Gruppen enthalten, sind von dem Gebiet der Elektrotauchlacke bekannt. Beispielhaft sei auf die Patentanmeldungen EP 0 012 463 A 1 oder EP 0 612 818 A 1 oder die Patentschrift US 4,071,428 A verwiesen.

Für den bevorzugten Einsatz der erfindungs gemäß Slurry in der Automobildecklackierung als unpigmentierte Klarlacke werden Polymere oder Oligomere mit Säuregruppen als Ionen bildende Gruppen bevorzugt, da diese sogenannten anionischen Bindemittel in der Regel eine bessere Resistenz gegen Vergilbung als die Klasse der kationischen Bindemittel aufweisen.

Doch kationische Bindemittel mit in Kationen überführbaren Gruppen wie Aminogruppen sind prinzipiell ebenfalls verwendbar, sofern das Einsatzgebiet deren typische Neberieigenschaften wie ihre Neigung zur Vergilbung verkraftet.

Als Bindemittel, welche Anionen bildende Gruppen enthalten, können beliebige Harze mit den vorstehend genannten Säuregruppen verwendet werden. Es ist jedoch wesentlich, daß sie daneben noch weitere Gruppen tragen, die eine Vernetzbarkeit gewährleisten. Erfindungsgemäß werden Hydroxylgruppen bevorzugt.

Als erfindungsgemäß zu verwendende Oligomere und Polymere dieser Art kommen hydroxylgruppenhaltige, vorzugsweise lineare und/oder verzweigte und/oder blockartig, kammartig und/oder statistisch aufgebaute Poly(meth)acrylate, Polyester, Alkyde, Polyurethane, acrylierte Polyurethane, acrylierte Polyester, Polylactone, Polycarbonate, Polyether, (Meth)Acrylatdiole oder Polyharnstoffe in Betracht.

Neben dem Hydroxylgruppen können die Oligomere und Polymere noch andere funktionelle Gruppen wie Acryloyl-, Ether-, Amid -, Imid -, Thio -, Carbonat- oder Epoxidgruppen enthalten, sofern diese nicht die Vernetzungsreaktionen stören.

Diese Oligomere und Polymere sind dem Fachmann bekannt, und zahlreiche geeignete Verbindungen sind am Markt erhältlich.

Erfindungsgemäß sind die Polyacrylate, die Polyester, die Alkydharze, die Polyurethane und/oder die acrylierten Polyurethane von Vorteil und werden deshalb bevorzugt verwendet.

Beispiele geeigneter Polyacrylate werden in der europäischen Patentanmeldung EP-A-0 767 185 und den amerikanischen Patentschriften US 5 480 493 A, US 5 475 073 A oder US 5 534 598 A beschrieben. Weitere Beispiele besonders bevorzugter Polyacrylate werden unter der Marke Joncryl^{R} vertrieben, wie etwa Joncryl^{R} SCX 912 und 922,5. Die Herstellung dieser Polyacrylate ist allgemein bekannt und wird beispielsweise in dem Standardwerk Houben-Weyl, Methoden der organischen Chemie, 4. Auflage, Band 14/1, Seiten 24 bis 255, 1961, beschrieben.

Die Herstellung der erfindungsgemäß bevorzugt verwendeten Polyester und Alkydharze ist allgemein bekannt und wird beispielsweise in dem Standardwerk Ullmanns Encyklopädie der technische Chemie, 3. Auflage, Band 14, Urban & Schwarzenberg, München, Berlin, 1963, Seiten 80 bis 89 und Seiten 99 bis 105, sowie in den Büchern: "Résines Alkydes-Polyesters" von J. Bourry, Paris, Verlag Dunod, 1952, "Alkyd Resins" von C. R. Martens, Reinhold Publishing Corporation, New York, 1961, sowie "Alkyd Resin Technology" von T. C. Patton, Intersience Publishers, 1962, bschrieben.

Die erfindungsgemäß besonders bevorzugt zu verwendenden Polyurethane und/oder acrylierten Polyurethane werden beispielsweise in den Patentanmeldungen EP 0 708 788 A 1, DE 44 01 544 A 1 oder DE 195 34 361 A 1 beschrieben.

Die erfindungsgemäßer Slurry enthält nichtionische und ionische Verdicker. Hierdurch wird der Neigung der vergleichsweise großen festen und/oder hochviskosen Partikel zur Sedimentation wirksam begegnet.

Beispiele nichtionischer Verdicker sind Hydroxyethylcellulose und Polyvinylalkohole. Sogenannte, nichtionische Assoziativ-Verdicker sind in vielfältiger Auswahl ebenfalls am Markt verfügbar. Sie bestehen in der Regel aus wasserverdünnbaren Polyurethanen, die Reaktionsprodukte von wasserlöslichen Polyetherdiolen, aliphatischen Diisocyanaten und monofunktionellen hydroxylischen Verbindungen mit organophilem Rest sind.

Ebenfalls kommerziell erhältlich sind ionische Verdicker. Diese enthalten üblicherweise anionische Gruppen und basieren insbesondere auf speziellen Polyacrylatharzen mit Säuregruppen, die teilweise oder vollständig neutralisiert sein können.

Beispiele geeigneter, erfindungsgemäß zu verwendender Verdicker sind aus dem Lehrbuch "Lackadditive" von Johan Bielemann, Wiley-VCH, Weinheim, New York, 1998, Seiten 31 bis 65, bekannt.

Für die erfindungsgemäße Slurry ist es wesentlich, daß beide der vorstehend beschriebenen Verdicker-Typen hierin enthalten sind. Die Menge der zuzusetzenden Verdicker und das Verhältnis von ionischem zu nichtionischem Verdicker richtet sich nach der gewünschten Viskosität der erfindungsgemäß Slurry, die wiederum von der benötigten Absetzstabilität und den speziellen Bedürfnissen der Spritzapplikation vorgegeben werden. Der Fachmann kann daher die Menge der Verdicker und das Verhältnis der Verdicker-Typen zueinander anhand einfacher Überlegungen gegebenenfalls unter Zuhilfenahme von Vorversuchen ermitteln.

Vorzugsweise wird ein Viskositätsbereich von 50 bis 1500 mPas bei einer Scherrate von 1000 s⁻¹ und von 150 bis 8000 mPas bei einer Scherrate von 10 s⁻¹ sowie von 180 bis 12000 mPas bei einer Scherrate von 1 s⁻¹ eingestellt.

Dieses als "strukturviskos" bekannte Viskositätsverhalten beschreibt einen Zustand, der einerseits den Bedürfnissen der Spritzapplikation und andererseits auch den Erfordernissen hinsichtlich Lager- und Absetzstabilität Rechnung trägt: Im bewegten Zustand, wie beispielsweise beim Umpumpen der erfindungsgemäßen Slurry in der Ringleitung der Lackieranlage und beim Versprühen, nimmt die erfindungsgemäße Slurry einen niederviskosen Zustand ein, der eine gute Verarbeitbarkeit gewährleistet. Ohne Scherbeanspruchung hingegen steigt die Viskosität an und gewährleistet auf diese Weise, daß der bereits auf dem zu lackierenden Substrat befindliche Lack eine verringerte Neigung zum Ablaufen an senkrechten Flächen zeigt ("Läuferbildung") hat. In gleicher Weise führt die höhere Viskosität im unbewegten Zustand, wie etwa bei der Lagerung, dazu, daß ein Absetzen der festen und/hochviksosen Partikel größtenteils verhindert wird oder ein Wiederaufrühren der während der Lagerzeit nur schwach abgesetzten erfindungsgemäßen Pulverslurry gewährleistet ist.

Die Partikel der erfindungsgemäßen Slurry können neben den vorstehend beschriebenen wesentlichen Bestandteilen Additive enthalten, wie sie in Klarlacken üblicherweise verwendet werden. Hierbei ist es wesentlich, daß diese Additive die Glasübergangstemperatur Tg der Bindemittel nicht wesentlich absenken.

Beispiele geeigneter Additive sind Polymere, Katalysatoren für die Vernetzung, Entlüftungsmittel, Entschäumer, Haftvermittler, Additive zur Verbesserung der Untergrundbenetzung, Additive zur Verbesserung der Oberflächenglätte, Mattierungsmittel, Lichtschutzmittel, Korrosionsinhibitoren, Biozide, Flammschutzmittel oder Polymerisationsinhibitoren, insbesondere Photoinhibitoren, wie sie in dem Buch "Lackadditive" von Johan Bielemann, Wiley-VCH, Weinheim, New York, 1998, beschrieben werden.

Der erfindungsgemäßen Slurry können im Film einvernetzbare Verlaufshilfsmittel, Reaktiwerdünner oder vernetzende Komponenten zugesetzt werden. Wichtig ist jedoch, daß diese Komponenten sich bevorzugt in der äußeren, wässrigen Phase der erfindungsgemäßen Slurry befinden und nicht in der dispersen organischen Phase, wo sie eine Absenkung der Glasübergangstemperatur Tg und damit eine Koaleszenz oder Koagulation von gegebenenfalls abgesetzten Partikeln bewirken würden.

Beispiele für geeignete Verbindungen dieser Art sind Polyole. Beispiele geeigneter Polyole sind stellungsisomere Diethyloctandiole oder Hydroxylgruppen enthaltende hyperverzweigte Verbindungen oder Dendrimere oder Hydroxylgruppen enthaltende Metatheseoligomere, wie sie in den Patentanmeldungen DE 198 09 643 A 1, DE 198 40 605 A 1 oder DE 198 05 421 A 1 beschrieben werden.

Erfindungsgemäß ist es von Vorteil, die erfindungsgemäße Slurry mit Hilfe des nachstehend beschriebenen Verfahrens herzustellen.

Bei dem bevorzugten Verfahren werden die ionisch stabilisierbaren Bindemittel und die Vernetzungsmittel sowie gegebenenfalls die Additive in organischer Lösung gemischt und zusammen mit Hilfe von Neutralisationmitteln in Wasser nach dem Sekundärdispersionsverfahren dispergiert. Sodann wird mit Wasser unter Rühren verdünnt. Es bildet sich zunächst eine Wasser-in-Öl-Emulsion aus, die bei weiterer Verdünnung in eine Öl-in- Wasser-Emulsion umschlägt. Dieser Punkt wird im allgemeinen bei Festkörpergehalten von < 50 Gew.%, bezogen auf die Emulsion, erreicht und ist äußerlich an einem stärkeren Abfall der Viskosität während der Verdünnung erkennbar.

Die so erhaltene, noch lösemittelhaltige Emulsion wird anschließend durch azeoptrope Destillation von Lösemitteln befreit (Strippen).

Die Destillationstemperatur richtet sich in erster Linie nach der Glasübergangstemperatur Tg des Bindemittels. Um Koagulate, d.h. ein Verfließen der erfindungsgemäß nur geringfügig stabilisierten Partikel zu einer separaten kontinuierlichen organischen. Phase während der Destillation zu vermeiden, ist es wesentlich, die Destillationstemperatur unterhalb der Glasübergangstemperatur Tg zu halten. Die Glasübergangstemperatur ist ersatzweise auch über die Mindestfilmbildetemperatur der Dispersion beschreibbar. Die Mindestfilmbildetemperatur kann ermittelt werden, indem die Dispersion mittels einer Rakel auf eine Glasplatte aufgezogen und auf einem Gradientenofen erwärmt wird. Die Temperatur, bei der die pulverförmige Schicht verfilmt, wird als Mindestfilmbildetemperatur bezeichnet. Ergänzend wird auf Römpp Lexikon Lacke und Druckfarben, Georg Thieme Verlag, Stuttgart, New York, 1998 »Mindestfilmbildetemperatur«, Seite 391, verwiesen.

Es ist von Vorteil, wenn die Mindestfilmbildetemperatur der Bindemittel mindestens 0°C, bevorzugt mindestens 10, besonders bevorzugt mindestens 15, ganz besonders bevorzugt mindestens 20 und insbesondere mindestens 25°C beträgt.

Es ist außerdem von Vorteil, wenn die zu entfernenden Lösemittel bei einer Destillationstemperatur unterhalb 70°C, bevorzugt unterhalb 50°C und insbesondere unterhalb 40°C abdestilliert werden. Gegebenenfalls wird der Destillationsdruck hierbei so gewählt, daß bei höhersiedenden Lösemitteln dieser Temperaturbereich eingehalten wird.

Im einfachsten Fall kann die azeotrope Destillation dadurch bewerkstelligt werden, daß man die Emulsion bei Raumtemperatur im offenen Gefäß während mehrerer Tage rührt. Im bevorzugten Fall wird die lösemittelhaltige Emulsion in einer Vakuumdestillation von den Lösemitteln befreit.

Die abgedunstete oder abdestillierte Menge an Wasser und Lösemitteln werden zur Vermeidung von hohen Viskositäten durch Wasser ersetzt. Die Zugabe des Wassers kann vorher, nachher oder auch während des Abdunstens oder der Destillation durch portionsweise Zugabe erfolgen.

Nach Verlust der Lösemittel steigt die Glasübergangstemperatur Tg der dispergierten Teilchen an, und es bildet sich anstelle der bisherigen lösemittelhaligen Emulsion (flüssig-in-flüssig-Dispersion) eine fest-in-flüssig-Dispersion oder die erfindungsgemäße Slurry aus.

Die Partikel der erfindungsgemäßen Slurry können im nassen Zustand noch mechanisch zerkleinert werden, was als Naßvermahlung bezeichnet wird. Vorzugsweise werden hierbei Bedingungen angewandt, daß die Temperatur des Mahlguts 70, bevorzugt 60 und insbesondere 50°C nicht überschreitet. Vorzugsweise beträgt der spezifische Energieeintrag während des Mahlprozesses 10 bis 1.000, bevorzugt 15 bis 750 und insbesondere 20 bis 500 Wh/g.

Für die Naßvermahlung können die unterschiedlichsten Vorrichtungen angewandt werden, die hohe oder niedrige Scherfelder erzeugen.

Beispiele geeigneter Vorrichtungen, die niedrige Scherfelder erzeugen, sind übliche und bekannte Rührkessel, Spalthomogenisatoren, Microfluidizer oder Dissolver.

Beispiele geeigneter Vorrichtungen, die hohe Scherfelder erzeugen, sind übliche und bekannte Rührwerksmühlen oder Inline-Dissolver.

Besonders bevorzugt werden die Vorrichtungen, die hohe Scherfelder erzeugen, angewandt. Von diesen sind die Rührwerksmühlen erfindungsgemäß besonders vorteilhaft und werden deshalb ganz besonders bevorzugt verwendet.

Generell wird bei der Naßvermahlung die Slurry mit Hilfe geeigneter Vorrichtungen, wie Pumpen, den vorstehend beschriebenen Vorrichtungen zugeführt und im Kreis hierrüber gefahren, bis die gewünschte Teilchengröße erreicht ist und die erfindungsgemäße Slurry resultiert.

Aus energetischen Gründen ist es insbesondere von Vorteil, wenn die zu vermahlende Slurry nur einen Teil, vorzugsweise 5 bis 90, bevorzugt 10 bis 80 und insbesondere 20 bis 70 Gew.-% der in der erfindungsgemäßen Slurry enthaltenen, vorstehend beschriebenen Verdicker enthält. Sofern diese Variante des bevorzugten Verfahrens angewandt wird, ist die restliche Menge an Verdicker nach der Naßvermahlung zuzusetzen, wodurch die erfindungsgemäße Slurry resultiert.

Die erfindungsgemäße Slurry weist vorteilhafterweise einen Festkörpergehalt von 10 bis 60 Gew.-%, insbesondere von 20 bis 50 Gew.-%, auf.

Die erfindungsgemäße Slurry kann noch vor ihrer Verwendung filtriert werden. Hierfür werden die üblichen und bekannten Filtrationsvorrichtungen und Filter verwendet, wie sie auch für die Filtration der bekannten Pulverklarlack Slurries in Betracht kommen. Die Maschenweite der Filter kann breit variieren und richtet sich in erster Linie nach der Teilchengröße und der Teilchengrößenverteilung der Partikel der erfindungsgemäßen Slurry. Der Fachmann kann daher die geeigneten Filter leicht anhand dieses physikalischen Parameters ermitteln. Beispiele geeigneter Filter sind Beutelfilter. Diese sind am Markt unter den Marken Pong® oder Cuno® erhältlich. Vorzugsweise werden Beutelfilter mit den Maschenweiten 10 bis 50 µm verwendet, beispielsweise Pong® 10 bis Pong® 50.

Hierbei zeigt sich der weitere besondere Vorteil der erfindungsgemäßen Slurry, nämlich daß sie selbst dann problemlos filtriert werden kann, wenn bei der Naßvermahlung die Mindestfilmbildetemperatur der hierin enthaltenen Partikel überschritten wurde.

Zur Herstellung der erfindungsgemäßen Klarlackierungen wird die erfindungsgemäße Slurry auf das zu beschichtende Substrat appliziert. Hierbei brauchen keine besonderen Maßnahmen ergriffen zu werden, sondern die Applikation kann nach den üblichen und bekannten Verfahren erfolgen, was ein weiterer besonderer Vorteil der erfindungsgemäßen Slurry ist.

Nach ihrer Applikation trocknet die erfindungsgemäße Slurry problemlos auf und zeigt bei der Verarbeitungstemperatur, in der Regel bei Raumtemperatur, kein Verfilmen. D.h., die als Naßschicht applizierte erfindungsgemäße Slurry lüftet bei Raumtemperatur oder leicht erhöhten Temperaturen unter Wasserabgabe ab, ohne daß die darin enthaltenen Partikel ihre ursprüngliche feste oder hochviskose Form verändern. Die pulverförmige feste Film läßt das Restwasser leichter Abdampfen als ein verfließender Naßfilm. Dadurch wird die Gefahr von im gehärteten Film eingeschlossenen Blasen von verdampftem Wasser ("Kochern") vermindert. Außerdem ist die Neigung zum "mudcracking" ausgesprochen gering. Überraschend ist hierbei der Befund, daß die erfindungsgemäßen Slurries eine umso geringere Neigung zu "mudcracking" haben, je höher ihre Partikelgrößen sind.

In dem nachfolgenden Einbrennschritt wird die nun weitgehend wasserfreie Pulverschicht geschmolzen und zur Vernetzung gebracht. In manchen Fällen kann es von Vorteil sein, den Verlaufprozess und die Vernetzungsreaktion mit einem zeitlichen Versatz ablaufen zu lassen, indem ein Stufenheizprogramm oder eine sogenannte Aufheizrampe gefahren wird. Die geeigneten Vernetzungstemperaturen liegen zwischen 120 und 160°C. Die entsprechende Einbrennzeit liegt zwischen 20 und 60 Minuten.

Die hierbei resultierende erfindungsgemäße Klarlackierung weist hervorragende anwendungstechnische Eigenschaften auf. So haftet die erfindungsgemäße Klarlackierung fest auf allen üblichen und bekannten farb- und/oder effektgebenden Basislacklackierungen oder auf Substraten wie Metall, Glas, Holz oder Kunststoff. Sie ist von hohem Glanz, glatt, kratzfest, witterungsbeständig und frei von Störungen wie Kochern. Außerdem kommt sie aufgrund ihres vorteilhaften Eigenschaftsprofils auch für Anwendungen außerhalb der Automobillackierung in Betracht, insbesondere für die industrielle Lackierung, inklusive Coil Coating, Container Coating und Beschichtung oder Imprägnierung von elektrotechnischen Bauteilen, sowie für die Lackierung von Möbeln, Fenster, Türen und Bauwerken im Innen- und Außenbereich. Vor allem aber zeigt die erfindungsgemäße Klarlackierung kein Weißanlaufen nach der Feuchtebelastung mehr. Daher sind auch die erfindungsgemäßen farb- und/oder effektgebenden Mehrschichtlackierungen, die mindestens eine erfindungsgemäße Klarlackierung enthalten, von besonders hohen Gebrauchswert und besonders langer Lebensdauer.

### Beispiele

### Herstellbeispiel 1

### Die Herstellung eines Lösungspolyacrylatharzes als Bindemittel

442,84 Teile Methylethlyketon (MEK) wurden in einem Reaktionsgefäß vorgelegt und auf 80°C erwärmt. Zu der Vorlage wurden bei 80°C binnen 4 h über zwei getrennte Zulaufbehälter der Initiator, bestehend aus 47,6 Teilen TBPEH (tert.-Butylperethylhexanoat) und 33,5 Teilen MEK, und die Monomerenmischung, bestehend aus 183,26 Teilen tert.-Butylacrylat, 71,4 Teilen n-Butylmethacrylat, 95,2 Teilen Cyclohexylmethacrylat, 121,38 Teilen Hydroxyethylmethacrylat und 4,76 Teilen Acrylsäure, zudosiert. Die Reaktionsmischung wurde noch für weitere 1,5 h bei 80°C gehalten. Anschließend wurden im Vakuum wurden bei 500 mbar ein Teil der flüchtigen Komponenten der Reaktionsmischung während 5 h abgezogen, bis der Festkörpergehalt bei 70 Gew.-% lag. Danach ließ man auf 50°C erkalten und trug die Harzlösung aus.

Die Harzlösung wies die folgenden Kennzahlen auf:

| | |
|---|---|
| Festkörper: | 70,2% (1 h bei 130°C) |
| Viskosität: | 4,8 dPas (Platte-Kegel-Viskosimeter, bei 23°C; 55%-ige Lösung, mit Xylol verdünnt) |
| Säurezahl: | 43,4 mg KOH/g Festharz |

### Herstellbeispiel 2

### Die Herstellung eines blockierten Polyisocyanats als Vernetzungsmittel (A)

534 Teile Desmodur® N 3300 (handelsübliches Trimeres von Hexamethylendiisocyanat der Firma Bayer AG) und 200 Teile MEK wurden vorgelegt und auf 40°C erwärmt. Anschließend gab man unter Kühlung 100 Teile 3,5-Dimethylpyrazol hinzu, wonach eine exotherme Reaktion eintrat. Nach dem Abklingen der Exothermie wurden unter Kühlung weitere 100 Teile 3,5-Dimethylpyrazol hinzugegeben. Nach dem erneuten Abklingen der Exothermie wurden noch weitere 66 Teile 3,5 Dimethylpyrazol hinzugegeben. Anschließend wurde die Kühlung langsam gestoppt, worauf sich die Reaktionsmischung langsam auf 80°C erwärmte. Die Reaktionsmischung wurde bei dieser Temperatur gehalten, bis ihr Isocyanatgehalt auf < 0,1% gesunken war. Anschließend wurde das Reaktionsprodukt abgekühlt und ausgetragen. Das blockierte Polyisocyanat (A) wies einen Festkörpergehalt von 80 Gew.-% (1 h bei 130°C) und eine Viskosität von 3,4 dPas (70%-ig in MEK; Platte-Kegel-Viskosimeter bei 23°C) auf.

### Herstellbeispiel 3

### Die Herstellung eines blockierten Polyisocyanats als Vernetzungsmittel (B)

837 Teile Isophorondiisocyanat wurden in einem geeigneten Reaktionsgefäß vorgelegt und mit 0,1 Teilen Dibutylzinndilaurat versetzt. Sodann ließ man eine Lösung aus 168 Teilen Trimethylolpropan und 431 Teilen MEK langsam zulaufen. Durch die exotherme Reaktion stieg die Temperatur an. Nachdem 80°C erreicht waren, wurde die Temperatur durch äußere Kühlung konstant gehalten, und der Zulauf wurde gegebenenfalls leicht gedrosselt. Nach Ende des Zulaufs hielt man noch für ca. 1 Stunde auf dieser Temperatur, bis der Isocyanatgehalt des Festkörpers 15,7 % (bezogen auf NCO-Gruppen) erreicht hatte. Anschließend wurde das Reaktionsgemisch auf 40°C gekühlt, und es wurde eine Lösung von 362 Teilen 3,5-Dimethylpyrazol in 155 Teilen MEK innerhalb 30 Minuten zugegeben. Nachdem das Reaktionsgemisch sich durch die Exothermie auf 80°C erwärmt hatte, hielt man die Temperatur für 30 Minuten konstant, bis der NCO-Gehalt auf kleiner 0,1% abgesunken war. Sodann fügte man 47 Teile n-Butanol zu der Reaktionsmischung hinzu, hielt für weitere 30 Minuten bei 80°C und trug sie nach kurzer Kühlung aus.

Das Reaktionsprodukt wies einen Festgehalt von 69,3% (1 h bei 130°C) auf.

### Beispiel 1

### Die Herstellung einer erfindungsgemäßen Pulverklarlack-Slurry

321,4 Teile der Bindemittellösung gemäß dem Herstellbeispiel 1, 57,9 Teile der Vernetzungsmittellösung (B) gemäß Herstellbeispiel 3 und 120,7 Teile der Vernetzungsmittelslösung (A) gemäß Herstellbeispiel 2 wurden bei Raumtemperatur in einem offenen Rührgefäß 15 min lang unter Rühren vermischt. Man fügte sodann 7,2 Teile Cyagard® 1164 (UV-Absorber der Firma Cytec), 2,2 Teile Tinuvin® flüssig 123 (sterisch gehindertes Amin "HALS" der Firma Ciba Geigy), 3 Teile N,N-Dimethylethanolamin 1,8 Teile Benzoin und 0,6 Teile Dibutylzinndilaurat hinzu und rührt für weitere 2 h bei Raumtemperatur. Sodann verdünnte man die Mischung mit 225,7 Teilen deionisiertem Wasser in kleinen Portionen. Nach einer Zwischenpause von 15 min. wurden weitere 260 Teile deionisiertes Wasser zugegeben. Es bildete sich eine Emulsion mit einem theoretischen Festkörpergehalt von 37%.

Die Emulsion wurde mit 283 Teilen deionisiertem Wasser verdünnt, und es wurde am Rotationsverdampfer unter Vakuum die gleiche Menge eines Gemisches aus flüchtigen organischen Lösemitteln und Wasser abgezogen bis der Festkörpergehalt wieder bei 37 Gew.-% lag (1 h bei 130°C), wodurch eine Slurry resultierte.

Zur Einstellung des gewünschten Viskositätsverhaltens wurden zu 1.000 Teilen der Slurry 22,6 Teile Acrysol® RM-8W (handelsüblicher Verdicker der Firma Rohm & Haas) und 6,5 Teile Viscalex® HV 30 (handelsüblicher Verdicker der Firma Allied Colloids) hinzu gegeben. Die resultierende Pulverklarlack-Slurry wies die folgenden Kennzahlen auf:

| | |
|---|---|
| Festkörper (1 h bei 130 °C): 36,6% | |
| Partikelgröße: | 6,4 µm (D.50; Laserbeugungsmessgerätder Firma Malvern) |
| Viskositätsverhalten: | 1920 mPas bei einer Scherrate von 10 s⁻¹ |
| | 760 mPas bei einer Scherrate von 100 s⁻¹ |
| | 230 mPas bei einer Scherrate von 1000 s⁻¹ |

### Vergleichsversuch V 1

### Die Herstellung einer nicht erfindungsgemäßen Pulverklarlack-Slurry

301,6 Teile der Bindemittellösung gemäß Herstellbeispiel 1 und 217,4 Teile der Vemetzungsmittellösung (B) gemäß Herstellbeispiel 3 wurden wie in Beispiel 1 beschrieben miteinander vermischt. Dann fügte man 7,2 Teile Cyagard® 1146 (UV- Absorber der Firma Cytgec), 2,2 Teile Tinuvin® 123, 2,8 Teile N,N-Dimethylethanolamin, 1,8 Teile Benzoin und 0,6 Teile Dibutylzinndilaurat hinzu. Nach 2 Stunden Rühren gab man 207 Teile deionisiertes Wasser in kleinen Portionen zu und verdünnte die resultierende Mischung 15 min später mit weiteren 260 Teilen deionisiertem Wasser. Es resultierte eine Emulsion mit einem theoretischen Festkörpergehalt von 37 Gew.-%.

Die Emulsion wurde mit 320,6 Teile deionisiertem Wasser weiter verdünnt, und es wurde am Rotationsverdampfer unter Vakuum die gleiche Menge eines Gemisches aus flüchtigen organischen Lösemitteln und Wasser abgezogen, bis der Festkörpergehalt wieder 37 Gew.-% erreichte (1 h bei 130°C).

Zur Einstellung des geeigneten Viskositätsverhaltens wurden zu 1.000 Teilen der Slurry 22,6 Teile Acrysol® RM-8W (handelsüblicher Verdicker der Firma Rohm & Haas) und 6,5 Teile Viscalex® HV 30 (handelsüblicher Verdicker der Firma Allied Colloids) hinzugegeben.

Die resultierende Pulverklarlack-Slurry wies die folgenden Kennzahlen auf:

| | |
|---|---|
| Festkörper (1 h bei 130 °C): 36,4% | |
| Partikelgröße: | 7,2 µm (D.50; Laserbeugungsmessgerätder Firma Malvern) |
| Viskositätsverhalten: | 1405 mPas bei einer Scherrate von 10 s⁻¹ |
| | 690 mPas bei einer Scherrate von 100 s⁻¹ |
| | 265 mPas bei einer Scherrate von 1000 s⁻¹ |

### Beispiel 2 und Vergleichsversuch V 2

### Die Herstellung einer erfindungsgemäßen (Beispiel 2) und einer nicht erfindungsgemäßen (Vergleichsversuch V 2) Klarlackierung

In einer ersten Versuchsreihe zur Applikation der erfindungsgemäßen Pulverklarlack-Slurries des Beispiels 1 und des Vergleichsversuchs V 1 wurde ein sogenannter integrierter Aufbau vorbereitet, der nachfolgend für den Metallicfarbton "Meteorgrau" beschrieben wird:
Auf mit handelsüblichem Elektrotauchlack kathodisch beschichteten Stahltafeln wurde mit einer Becherpistole zunächst eine Funktionsschicht (Ecoprime® Meteorgrau; BASF Coatings AG) appliziert. Nach 5-minütigem Ablüften bei Raumtemperatur wurde auf diese Schicht in gleicher Weise ein meteorgrauer Wassermetallic-Basislack (Ecostar® Meteorgrau; BASF Coatings AG) appliziert und anschließend für 5 min bei 80°C vorgetrocknet.

Nach Abkühlen der Tafeln wurden in gleicher Weise die erfindungsgemäßen Pulverklarlack-Slurries des Beispiels 1 und des Vergleichsversuchs V 1 appliziert. Hiernach ließ man die Tafeln zunächst 5 min ablüften und anschließend 15 min lang bei 40°C vortrocknen. Dann wurden sie während 30 min bei 145°C eingebrannt.

Es resultierten eine erfindungsgemäße (Beispiel 2) und eine nicht erfindungsgemäße (Vergleichsversuch V 2) Wassermetallic-Gesamtlackierung in dem Farbton "Meteorgrau". Die applizierten Naßschichten waren so gewählt worden, daß nach dem Einbrennen die Trockenschichtdicken für die Funktionsschicht und den Wassermetallic-Basislack jeweils bei 15 µm lagen. Die erfindungsgemäße (Beispiel 2) und die nicht erfindungsgemäße (Vergleichsversuch V 2) Klarlackierung hatten eine Schichtdicke von jeweils 40 bis 45 µm. Die Tabelle gibt einen Überblick über wichtige anwendungstechnische Eigenschaften der Klarlackierungen.

Die erste Versuchsreihe wurde wiederholt, nur daß bei der zweiten Versuchsreihe die Pulverklarlack-Slurries des Beispiels 1 und des Vergleichsversuchs V 1 in der Form eines Keils aufgetragen wurden, sodaß Trockenschichtdicken der Klarlackierungen von 20 bis 100 µm resultierten. Die Tabelle gibt Auskunft über die Grenze der Kocherstabilität.

Die in der Tabelle angegebenen Versuchsergebnisse belegen, daß die Klarlackierung des Vergleichsversuchs V 2 zwar eine hohe Kocherstabilität aufweist, indes beim Heißwassertest weiß anläuft. Dagegen weist die Klarlackierung des Beispiels 2 einen höheren Glanz, eine höhere Brillianz und eine vergleichbare Kocherstabilität auf, beim Heißwassertest läuft sie jedoch nicht weiß an.

**Tabelle:**

| **Die anwendungstechnischen Eigenschaften der erfindungsgemäßen (Beispiel 2) und der nicht erfindungsgemäßen (Vergleichsversuch V 2) Klarlackierung** | | |
|---|---|---|
| **Eigenschaften** | **Vergleichsversuchs V 2** | **Beispiel 2** |
| Trockenschichtdicke | 40 - 45 µm | 44-48 µm |
| Glanz bei 20° ¹⁾ | 78 | 85 |
| Haze ¹⁾ | 80 | 25 |
| Aussehen | glänzend | brilliant |
| Verlauf | gut | sehr gut |
| Kochergrenze | 70 µm | 65 µ |
| Mudcracking | nein | nein |
| **Weißanlaufen im Heißwassertest**²⁾ | **ja** | **nein** |

| | | |
|---|---|---|
| 1) Meßgerät, Hersteller Fa. Byk; 2) nach Lagerung der Tafeln in 90°C heißem Wasser; zur Beurteilung wurden die Ränder mit einem 1 cm breiten Klebstreifen geschützt; nach Entfernen am Testende konnten Schädigungen an der ungeschützten Fläche besser erkannt werden. | | |

## Patentansprüche

1. Strukturviskose, von organischen Lösemitteln und externen Emulgatoren freie Pulverklarlack-Sluny, enthaltend feste und/oder hochviskose, unter Lagerungs- und Anwendungsbedingungen dimensionsstabile Partikel einer mittleren Teilchengröße von 0,8 bis 20 µm und einer maximalen Teilchengröße von 30 µm, wobei die Partikel mindestens ein Bindemittel und mindestens ein Vernetzungsmittel enthalten, **dadurch gekennzeichnet, daß** als Vernetzungsmittel
(A) mindestens ein Vernetzungsmittel, durch das weiche Segmente in das dreidimensionale Netzwerk der Klarlackierung eingeführt werden, und
(B) mindestens ein Vernetzungsmittel, durch das harte Segmente in das dreidimensionale Netzwerk der Klarlackierung eingeführt werden,
oder alternativ
(A/B) mindestens ein Vernetzungsmittel, durch das sowohl weiche als auch harte Segmente in das dreidimensionale Netzwerk der Klarlackierung eingeführt werden,
verwendet wird oder werden, wobei
es sich bei den weichmachenden Segmenten um Molekülbausteine handelt, die als Bestandteil von dreidimensionalen Netzwerken deren Glasübergangstemperatur Tg erniedrigen, und bei den harten Segmenten um Molekülbausteine handelt, die als Bestandteil von dreidimensionalen Netzwerken deren Glasübergangstemperatur Tg erhöhen.

2. Pulverklarlack-Sluny nach Anspruch 1, **dadurch gekennzeichnet, daß** die Molekülbausteine zweibindige organische Reste sind.

3. Pulverklarlack-Slurry nach Anspruch 2, **dadurch gekennzeichnet, daß** die weichen zweibindigen organischen Reste substituierte oder unsubstituierte, lineare oder verzweigte Alkandiyl-Reste mit 4 bis 20 Kohlenstoffatomen sind.

4. Pulverklarlack-Sluny nach Anspruch 2, **dadurch gekennzeichnet, daß** die harten zweibindigen organischen Reste substituierte oder unsubstituierte Cycloalkandiyl-Reste mit 4 bis 20 Kohlenstoffatomen sind.

5. Pulverklarlack-Sluny nach einem der Ansprüche 1 bis 4, **dadurch gekennzeichnet, daß** als Vernetzungsmittel (A), (B) und/oder (A/B) blockierte Polyisocyanate verwendet werden.

6. Pulverklarlack-Slurry nach Anspruch 5, **dadurch gekennzeichnet, daß** als blockierte Polyisocyanate (A) Isocyanurat-, Biuret-, Allophanat-, Iminooxadiazindion-, Urethan-, Carbodiimid-, Hamstoff- und/oder Uretdiongruppen enthaltende Oligomere von Hexamethylendiisocyanat verwendet werden.

7. Pulverklarlack-Sluny nach Anspruch 5, **dadurch gekennzeichnet, daß** als blockierte Polyisocyanate (B) Isocyanurat-, Biuret-, Allophanat-, Iminooxadiazindion-, Urethan-, Carbodiimid-, Hamstoff- und/oder Uretdiongruppen enthaltende Oligomere von Isophorondiisocyanat verwendet werden.

8. Pulverklarlack-Slurry nach einem der Ansprüche 5 bis 7, **dadurch gekennzeichnet, daß** als Blockierungsmittel
i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonopropylether, Diethylenglykolmonomethylether, Diethylenglykolmonoethylether, Propylenglykolmonomethylether, Methoxymethanol, Trimethylolpropan, Glycerin, Glykolsäure, Glykolsäureester, Milchsäure, Milchsäureester, Methylolhamstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthiohamstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole oder Triazole; sowie
xvii) Gemische dieser Blockierungsmittel
verwendet werden.

9. Pulverklarlack-Slurry nach Anspruch 8, **dadurch gekennzeichnet, daß** man als substituierte Pyrazole (xvi) 3,4-Dimethyl- und/oder 3,5-Dimethylpyrazol und als Gemisch (xvii) 3,4-Dimethyl- und/oder 3,5-Dimethylpyrazol und Trimethylolpropan verwendet.

10. Pulverklarlack-Sluny nach einem der Ansprüche 1 bis 9, **dadurch gekennzeichnet, daß** sie einen Festkörpergehalt von 10 bis 60 Gew.% hat.

11. Pulverklarlack-Slurry nach einem der Ansprüche 1 bis 10, **dadurch gekennzeichnet, daß** die mittlere Teilchengröße der festen Partikel bei 3 bis 15 µm liegt.

12. Pulverklarlack-Slurry nach einem der Ansprüche 1 bis 11, **dadurch gekennzeichnet, daß** hierin ionische Verdicker und nichtionische Assoziativ-Verdicker enthalten sind.

13. Pulverklarlack-Sluny nach einem der Ansprüche 1 bis 12, **dadurch gekennzeichnet, daß** die festen Partikel Polyole als Bindemittel enthalten.

14. Pulverklarlack-Sluny nach Anspruch 13, **dadurch gekennzeichnet, daß** sie Polyacrylate als Bindemittel enthalten.

15. Pulverklarlack-Sluny nach einem der Ansprüche 1 bis 14, **dadurch gekennzeichnet, daß** sie einen Gehalt an Ionen bildenden Gruppen von 0,05 bis 1 meq/g, einen Gehalt an Neutralisationsmitteln von 0,05 bis 1 meq/g und eine Viskosität von (i) 50 bis 1500 mPas bei einer Scherrate von 1000 s⁻¹, (ii) 150 bis 8000 mPas bei einer Scherrate von 10 s⁻¹ und (iii) 180 bis 12000 mPas bei einer Scherrate von 1 s⁻¹ aufweist.

16. Die Pulverklarlack-Sluny nach einem der Ansprüche 1 bis 15 **dadurch gekennzeichnet, daß** sie eine Mindestfilmbildetemperatur von mehr als 20°C aufweist.

17. Verwendung der Pulverklarlack-Slurry gemäß einem der Ansprüche 1 bis 16 für die Herstellung von Klarlackierungen für die Automobilerst- und die Automobilreparaturlackierung, die Lackierung von Möbeln, Fenster, Türen und Bauwerken im Innen- und Außenbereich sowie die industrielle Lackierung, inklusive Coil Coating, Container Coating und Beschichtung oder Imprägnierung von elektrotechnischen Bauteilen.

18. Klarlackierung und mehrschichtige farb- und/oder effektgebende Lackierung, herstellbar unter Verwendung der Pulverklarlack-Sluny gemäß einem der Ansprüche 1 bis 16.

## Claims

1. Pseudoplastic powder clearcoat slurry free from organic solvents and external emulsifiers and comprising solid and/or highly viscous particles, dimensionally stable under storage and application conditions, having an average size of from 0.8 to 20 µm and a maximum size of 30 µm, said particles comprising at least one binder and at least one crosslinking agent, **characterized in that** said crosslinking agent comprises
(A) at least one crosslinking agent which introduces soft segments into the three-dimensional network of the clearcoat, and
(B) at least one crosslinking agent which introduces hard segments into the three-dimensional network of the clearcoat,
or alternatively
(A/B)at least one crosslinking agent which introduces both soft and hard segments into the three-dimensional network of the clearcoat, the softening segments comprising molecular building blocks which lower the glass transition temperature Tg of three-dimensional networks in which they are included, and the hard segments comprising molecular building blocks which increase the glass transition temperature Tg of three-dimensional networks in which they are included.

2. Powder clearcoat slurry according to Claim 1, **characterized in that** the molecular building blocks are divalent organic radicals.

3. Powder clearcoat slurry according to Claim 2, **characterized in that** the soft divalent organic radicals are substituted or unsubstituted, linear or branched alkanediyl radicals having 4 to 20 carbon atoms.

4. Powder clearcoat slurry according to Claim 2, **characterized in that** the hard divalent organic radicals are substituted or unsubstituted cycloalkanediyl radicals having 4 to 20 carbon atoms.

5. Powder clearcoat slurry according to any of Claims 1 to 4, **characterized in that** blocked polyisocyanates are used as crosslinking agent(s) (A), (B) and/or (A/B).

6. Powder clearcoat slurry according to Claim 5, **characterized in that** hexamethylenediisocyanate oligomers containing isocyanurate, biuret, allophanate, iminooxa-diazinedione, urethane, carbodiimide, urea and/or uretdione groups are used as blocked polyisocyanates (A).

7. Powder clearcoat slurry according to Claim 5, **characterized in that** isophorone diisocyanate oligomers containing isocyanurate, biuret, allophanate, iminooxadiazinedione, urethane, carbodiimide, urea and/or uretdione groups are used as blocked polyisocyanates (B).

8. Powder clearcoat slurry according to any of Claims 5 to 7, **characterized in that** blocking agents are used as
i) phenols such as phenol, cresol, xylenol, nitrophenol, chlorophenol, ethylphenol, t-butylphenol, hydroxybenzoic acid, esters of this acid, or 2,5-di-tert-butyl-4-hydroxytoluene;
ii) lactams, such as ε-caprolactam, δ-valerolactam, γ-butyrolactam or β-propiolactam;
iii) active methylenic compounds, such as diethyl malonate, dimethyl malonate, methyl or ethyl acetoacetate or acetylacetone;
iv) alcohols such as methanol, ethanol, n-propanol, isopropanol, n-butanol, isobutanol, t-butanol, n-amyl alcohol, t-amyl alcohol, lauryl alcohol, ethylene glycol monomethyl ether, ethylene glycol monoethyl ether, ethylene glycol monopropyl ether, diethylene glycol monomethyl ether, diethylene glycol monoethyl ether, propylene glycol monomethyl ether, methoxymethanol, trimethylolpropane, glycerol, glycolic acid, glycolic esters, lactic acid, lactic esters, methylolurea, methylolmelamine, diacetone alcohol, ethylenechlorohydrin, ethylenebromohydrin, 1,3-dichloro-2-propanol, 1,4-cyclohexyldimethanol or acetocyanohydrin;
v) mercaptans such as butyl mercaptan, hexyl mercaptan, t-butyl mercaptan, t-dodecyl mercaptan, 2-mercaptobenzothiazole, thiophenol, methylthiophenol or ethylthiophenol;
vi) acid amides such as acetoanilide, acetoanisidinamide, acrylamide, methacrylamide, acetamide, stearamide or benzamide;
vii) imides such as succinimide, phthalimide or maleimide;
viii) amines such as diphenylamine, phenylnaphthylamine, xylidine, N-phenylxylidine, carbazole, aniline, naphthylamine, butylamine, dibutylamine or butylphenylamine;
ix) imidazoles such as imidazole or 2-ethylimidazole;
x) ureas such as urea, thiourea, ethyleneurea, ethylenethiourea or 1,3-diphenylurea;
xi) carbamates such as phenyl N-phenylcarbamate or 2-oxazolidone;
xii) imines such as ethyleneimine;
xiii) oximes such as acetone oxime, formaldoxime, acetaldoxime, acetoxime, methyl ethyl ketoxime, diisobutyl ketoxime, diacetyl monoxime, benzophenone oxime or chlorohexanone oximes;
xiv) salts of sulphurous acid such as sodium bisulphite or potassium bisulphite;
xv) hydroxamic esters such as benzyl methacrylohydroxamate (BMH) or allyl methacrylohydroxamate; or
xvi) substituted pyrazoles or triazoles; and
xvii) mixtures of these blocking agents.

9. Powder clearcoat slurry according to Claim 8, **characterized in that** 3,4-dimethyl- and/or 3,5-dimethylpyrazole are/is used as substituted pyrazoles (xvi) and 3,4-dimethyl- and/or 3,5-dimethylpyrazole and trimethylolpropane are used as mixture (xvii).

10. Powder clearcoat slurry according to any of Claims 1 to 9, which has a solids content of from 10 to 60% by weight.

11. Powder clearcoat slurry according to any of Claims 1 to 10, **characterized in that** the average size of the solid particles is from 3 to 15 µm.

12. Powder clearcoat slurry according to any of Claims 1 to 11, comprising ionic thickeners and nonionic associative thickeners.

13. Powder clearcoat slurry according to any of Claims 1 to 12, **characterized in that** the solid particles comprise polyols as binders.

14. Powder clearcoat slurry according to Claim 13, **characterized in that** they comprise polyacrylates as binders.

15. Powder clearcoat slurry according to any of Claims 1 to 14, containing from 0.05 to 1 meq/g of ion-forming groups and from 0.05 to 1 meq/g of neutralizing agents and having a viscosity of (i) from 50 to 1500 mPas at a shear rate of 1000 s⁻¹, (ii) from 150 to 8000 mPas at a shear rate of 10 s⁻¹, and (iii) from 180 to 12,000 mPas at a shear rate of 1 s⁻¹.

16. Powder clearcoat slurry according to any of Claims 1 to 15, which has a minimum film-forming temperature of more than 20°C.

17. Use of the powder clearcoat slurry according to any of Claims 1 to 16 to produce clearcoats for automotive finishing and refinishing, the coating of furniture, windows, doors, and interior and exterior architecture, and industrial coating, including coil coating, container coating, and the coating or impregnation of electrical components.

18. Clearcoat and multicoat colour and/or effect coating system, producible using the powder clearcoat slurry according to any of Claims 1 to 16.

## Revendications

1. Suspension de vernis clair pulvérulent à structure visqueuse, exempte de solvants organiques et d'émulsionnants externes, contenant des particules solides et/ou hautement visqueuses dimensionnellement stables dans des conditions de stockage et d'utilisation, d'une taille particulaire moyenne de 0,8 à 20 µm et d'une taille particulaire maximale de 30 µm, dans laquelle les particules contiennent au moins un liant et au moins un agent de réticulation, **caractérisée en ce que** l'on utilise comme agent de réticulation :
(A) au moins un agent de réticulation par lequel des segments souples sont incorporés au réseau tridimensionnel du vernis clair, et
(B) au moins un agent de réticulation par lequel des segments rigides sont incorporés au réseau tridimensionnel du vernis clair,
ou, en variante,
(A/B) au moins un agent de réticulation par lequel des segments tant souples que rigides sont incorporés au réseau tridimensionnel du vernis clair,
où
les segments plastifiants sont des composants moléculaires qui, en tant que composant de réseaux tridimensionnels, réduisent leur température de transition vitreuse Tg, et les segments rigides sont des composants moléculaires qui, en tant que composant de réseaux tridimensionnels, augmentent leur température de transition vitreuse Tg.

2. Suspension de vernis clair pulvérulent selon la revendication 1, **caractérisée en ce que** les composants moléculaires sont des résidus organiques divalents.

3. Suspension de vernis clair pulvérulent selon la revendication 2, **caractérisée en ce que** les résidus organiques divalents souples sont des résidus alcanediyle, substitués ou non substitués, linéaires ou ramifiés, ayant 4 à 20 atomes de carbone.

4. Suspension de vernis clair pulvérulent selon la revendication 2 , **caractérisée en ce que** les résidus organiques divalents rigides sont des résidus cycloalcanediyle, substitués ou non substitués, ayant 4 à 20 atomes de carbone.

5. Suspension de vernis clair pulvérulent selon l'une quelconque des revendications 1 à 4, **caractérisée en ce que** l'on utilise comme agents de réticulation (A), (B) et/ou (A/B) des polyisocyanates bloqués.

6. Suspension de vernis clair pulvérulent selon la revendication 5, **caractérisée en ce que** l'on utilise comme polyisocyanates bloqués (A) des oligomères de diisocyanate d'hexaméthylène contenant des groupements isocyanurate, biuret, allophanate, iminooxadiazine-dione, uréthanne, carbodiimide, urée et/ou uretdione.

7. Suspension de vernis clair pulvérulent selon la revendication 5, **caractérisée en ce que** l'on utilise comme polyisocyanates bloqués (B) des oligomères de diisocyanate d'isophorone contenant des groupements isocyanurate, biuret, allophanate, iminooxadiazine-dione, uréthanne, carbodiimide, urée et/ou uretdione.

8. Suspension de vernis clair pulvérulent selon l'une quelconque des revendications 5 à 7, **caractérisée en ce que** l'on utilise comme agent bloquant :
i) des phénols, tels que lé phénol, le crésol, le xylénol, le nitrophénol, le chlorophénol, l'éthylphénol, le t-butylphénol, l'acide hydroxy-benzoique, l'ester de cet acide ou le 2,5-di-tert-butyl-4-hydroxytoluène;
ii) des lactames, tels que le ε-caprolactame, le δ-valérolactame, le γ-butyrolactame ou le β-propiolactame;
iii) des composés méthyléniques actifs, tels que le malonate de diéthyle, le malonate de diméthyle, l'ester éthylique ou méthylique de l'acide acétoacétique ou l'acétylacétone;
iv) des alcools, tels que le méthanol, l'éthanol, le n-propanol, l'isopropanol, le n-butanol, l'isobutanol, le t-butanol, l'alcool de n-amyle, l'alcool de t-amyle, l'alcool de lauryle, le monométhyléther d'éthylèneglycol, le monoéthyléther d'éthylèneglycol, le monopropyléther d'éthylèneglycol, le monométhyléther de diéthylèneglycol, le monoéthyléther de diéthylèneglycol, le monométhyléther de propylèneglycol, le méthoxyméthanol, le triméthylolpropane, la glycérine, l'acide glycolique, des esters de l'acide glycolique, l'acide lactique, des esters de l'acide lactique, la méthylolurée, la mélamine méthylolée, le diacétonalcool, la chlorohydrine d'éthylène, la bromhydrine d'éthylène, le 1,3-dichloro-2-propanol, le 1,4-cyclohexyldiméthanol ou l'acétocyanhydrine;
v) des mercaptans, tels que le butylmercaptan, l'hexylmercaptah, le t-butylmercaptan, le t-dodécylmercaptan, le 2-mercaptobenzothiazol, le thiophénol, le méthylthiophénol ou l'éthylthiophénol;
vi) des amides d'acides, tels que l'acétanilide, l'amide d'acétoanisidine, l'acrylamide, le méthacrylamide, l'amide d'acide acétique, l'amide d'acide stéarique ou le benzamide;
vii) des imides, tels que le succinimide, le phtalimide ou le maléimide;
viii) des amines, telles que la diphénylamine, la phénylnaphtylamine, la xylidine, la N-phénylxylidine, le carbazole, l'aniline, la naphtylamine, la butylamine, la dibutylamine ou la butylphénylamine;
ix) des imidazoles, tels que l'imidazole ou le 2-éthylimidazole;
x) des urées, telles que l'urée, la thiourée, l'éthylèneurée, l'éthylènethiourée ou la 1,3-diphénylurée;
xi) des carbamates, tels que l'ester phénylique de l'acide N-phénylcarbamique ou la 2-oxazolidone;
xii) des imines, telles que l'éthylèneimine;
xiii) des oximes, tels que l'oxime d'acétone, le formaldoxime, l'acétaldoxime, l'acétoxime, le méthyléthylcétoxime, le diisobutylcétoxime, le diacétylmonoxime, l'oxime de benzophénone ou les chlorohexanonoximes;
xiv) des sels de l'acide sulfureux, tels que le bisulfite de sodium ou le bisulfite de potassium;
xv) des esters de l'acide hydroxamique, tels que le benzylméthacrylohydroxamate (BMH) ou l'allyl-méthacrylohydroxamate; ou
xvi) des pyrazoles ou des triazoles substitués; ainsi que
xvii) des mélanges de ces agents bloquants.

9. Suspension de vernis clair pulvérulent selon la revendication 8, **caractérisée en ce que** l'on utilise comme pyrazoles substitués (xvi) le 3,4-diméthyl- et/ou le 3,5-diméthylpyrazole et comme mélange (xvii) le 3,4-diméthyl- et/ou le 3,5-diméthylpyrazole et le triméthylolpropane.

10. Suspension de vernis clair pulvérulent selon l'une quelconque des revendications 1 à 9, **caractérisée en ce qu'**elle a une teneur en corps solides de 10 à 60% en poids.

11. Suspension de vernis clair pulvérulent selon l'une quelconque des revendications 1 à 10, **caractérisée en ce que** la taille moyenne des particules solides est de 3 à 15 µm.

12. Suspension de vernis clair pulvérulent selon l'une quelconque des revendications 1 à 11, **caractérisée en ce qu'**elle contient des épaississants ioniques et des épaississants associatifs non ioniques.

13. Suspension de vernis clair pulvérulent selon l'une quelconque des revendications 1 à 12, **caractérisée en ce que** les particules solides contiennent des polyols comme liants.

14. Suspension de vernis clair pulvérulent selon la revendication 13, **caractérisée en ce qu'**elle contient des polyacrylates comme liant.

15. Suspension de vernis clair pulvérulent selon l'une quelconque des revendications 1 à 14, **caractérisée en ce qu'**elle présente une teneur en groupements formateurs d'ions de 0,05 à 1 méq./g, une teneur en agents de neutralisation de 0,05 à 1 méq./g et une viscosité (i) de 50 à 1500 mPas à un taux de cisaillement de 1000 s⁻¹, (ii) de 150 à 8000 mPas à un taux de cisaillement de 10 s⁻¹ et (iii) de 180 à 12000 mPas à un taux de cisaillement de 1 s⁻¹.

16. Suspension de vernis clair pulvérulent selon l'une quelconque des revendications 1 à 15, **caractérisée en ce qu'**elle présente une température minimale de formation de film supérieure à 20°C.

17. Utilisation de la suspension de vernis clair pulvérulent selon l'une quelconque des revendications 1 à 16 pour la fabrication de vernis clairs pour l'enduction de fond et l'enduction de retouche pour automobiles, l'enduction de meubles, de fenêtres, de portes et d'ouvrages à l'intérieur comme à l'extérieur, et du vernis industriel, notamment le couchage sur bande, l'enduction de conteneurs et le revêtement ou l'imprégnation de composants électrotechniques.

18. Vernis clair et vernis multicouche donnant une coloration et/ou un effet, que l'on peut fabriquer en utilisant la suspension de vernis clair pulvérulent selon l'une quelconque des revendications 1 à 16.
